# FASCICULE DE BREVET EUROPEEN

(11) **EP 0 527 084 B1**
(45) Date de publication et mention de la délivrance du brevet: **02.10.1996**
(21) Numéro de dépôt: 92402223.9
(22) Date de dépôt: 04.08.1992
(51) Int. Cl.: H04N 9/31, G02B 27/10

(54) **Projecteur d'images à efficacité lumineuse optimisée**
Bildprojektor mit optimierter Lichtausbeute
Image projector with maximized light efficiency

(30) Priorité: 06.08.1991 FR 9109997
(43) Date de publication de la demande: 10.02.1993
(73) Titulaire: THOMSON-CSF, 75008 Paris (FR)
(72) Inventeur: Nicolas, Christophe, F-92045 Paris la Défense (FR); Loiseaux, Brigitte, F-92045 Paris la Défense (FR); Huignard, Jean-Pierre, F-92045 Paris la Défense (FR)
(74) Mandataire: Guérin, Michel

(56) Documents cités:
- EP-A- 0 376 395
- WO-A-85/01630
- FOURTH INTERNATIONAL COLLOQUIUM ON ADVANCED TELEVISION SYSTEMS; OTTAWA; CANADA JUNE 25-29, 1990 R. GERHARD-MULTHAUPT: DE LUMIERE POUR LA TVHD

## Description

L'invention concerne les projecteurs d'images dans lesquels deux directions de polarisation orthogonales et complémentaires de la lumière sont modulées en vue de former une image à projeter.

Dans les projecteurs d'images notamment vidéo, l'image projetée sur un écran résulte d'une modulation spatiale de la lumière. La lumière produite par une source est guidée jusqu'à un ensemble de modulation de lumière regroupant les moyens nécessaires à réaliser la modulation spatiale de la lumière. Il est courant d'utiliser en tant que modulateur spatial de lumière, un écran à cristaux liquides (en abrégé "écran matriciel LCD", de l'anglais "Liquid Crystal Display" ) comprenant un réseau matriciel de cellules élémentaires à cristaux liquides. Les cellules à cristaux liquides sont commandées à partir d'un signal vidéo et chaque cellule représente un point élémentaire d'image ; l'écran matriciel LCD constitue ainsi une diapositive électrooptique.

La manière la plus simple de former une image à l'aide d'un écran matriciel à cristaux liquides consiste à éclairer celui-ci par une lumière polarisée linéairement. A cet effet, il est courant d'une part, d'interposer un polariseur entre la source de lumière et l'écran matriciel, afin de sélectionner une direction particulière de polarisation pour l'éclairage de l'écran matriciel ; puis d'autre part de placer à la suite de l'écran matriciel un second polariseur (appelé alors "analyseur de polarisation" ) qui transforme en modulation d'intensité, la modulation angulaire de polarisation produite par l'écran matriciel. L'inconvénient majeur de cette méthode est que par la sélection d'une direction particulière de polarisation, pour l'éclairage de l'écran matriciel LCD, on perd plus de la moitié de l'énergie lumineuse.

Pour améliorer l'efficacité d'éclairage de l'écran matriciel LCD, il est connu de séparer spatialement la lumière en deux faisceaux polarisés ayant des directions de polarisations complémentaires, en vue d'utiliser toute la lumière produite par la source. A cet effet plusieurs méthodes peuvent être employées :
a - suivant une première méthode (voir demande de brevet européen EP-A- 0. 372. 905), chaque faisceau polarisé éclaire un écran matriciel LCD différent ; et les images formées séparément par les deux écrans matriciels LCD sont superposées. L'inconvénient important de cette méthode est qu'elle requiert l'utilisation de deux écrans LCD par couleur primaire, ce qui conduit à un coût très élevé du projecteur d'images ;
b - une autre méthode consiste à faire tourner de 90° la direction de polarisation de l'un des deux faisceaux polarisés, pour que dans les deux faisceaux polarisés la direction de polarisation soit la même ; puis de diriger ensuite les deux faisceaux de manière à éclairer l'écran matriciel LCD. Une telle structure est montrée et décrite dans EP-A- 0 376 395 ou dans le compte-rendu de conférence "EURODISPLAY", page 90, organisé en 1990 par S.I.D. à Amsterdam.

Quelle que soit la méthode a ou b ci-dessus décrite qui est utilisée, une autre cause importante du faible rendement lumineux réside dans des pertes de lumière dues aux différences entre la forme de l'écran matriciel LCD et la forme de la section du faisceau de lumière non polarisée que produit la source de lumière.

Ainsi par exemple, dans le cadre du développement des téléviseurs à haute définition et à grand écran, l'image est prévue avec un format 16/9 (rapport de la longueur à la largeur). Un projecteur d'images répondant à cette définition utilise un écran modulateur spatial ayant ce format. Dans ce cas, en supposant suivant le cas le plus courant, que le faisceau de lumière non polarisée produit par la source ait une section circulaire, la fraction d'énergie lumineuse utilisée pour éclairer le rectangle que constitue l'écran modulateur spatial, correspond seulement au rapport SR/SF de la surface SR de ce rectangle à la surface SF de la section du faisceau de lumière non polarisée, soit 0,54 ; ceci correspondant au meilleur des cas, c'est-à-dire lorsque la surface SR de l'écran modulateur est au format 16/9 et aussi grande que possible, tout en étant contenue dans la surface SF de la section du faisceau de lumière non polarisée.

La présente invention a pour principal but de réduire les pertes de lumière dues aux différences entre la forme de l'écran modulateur spatial et la forme de la section du faisceau de lumière non polarisée, dans les projecteurs d'images utilisant les deux directions orthogonales et complémentaires de polarisation de la lumière. L'invention s'applique aussi bien dans le cas des projecteurs à images monochromes que des projecteurs d'images couleurs.

Suivant l'invention, un projecteur d''images comportant au moins un écran modulateur spatial de lumière, au moins un séparateur de polarisation de la lumière éclairé par un faisceau de lumière non polarisée délivrée par une source, le séparateur de polarisation produisant en réponse un premier et un second faisceaux polarisés ayant l'un par rapport à l'autre des directions de polarisation orthogonales de la lumière, la lumière de ces deux faisceaux polarisés étant destinée à être modulée par l'écran modulateur spatial, caractérisé en ce qu'il comporte en outre des moyens pour, d'une part séparer la lumière correspondant à au moins un de ces deux faisceaux polarisés, en au moins deux sous-faisceaux ayant chacun une section dont la forme est homothétique de celle de l'écran modulateur spatial, et d'autre part superposer les sous-faisceaux sur l'écran modulateur spatial.

Une telle disposition présente l'avantage, dans le cas par exemple d'un écran modulateur spatial au format 16/9, éclairé à partir d'un faisceau de lumière non polarisée ayant une section circulaire, de porter à 64 % la fraction d'énergie lumineuse qui éclaire cet écran modulateur spatial sous la forme de lumière polarisée, soit une amélioration de 1, 2 par rapport à l'art antérieur.

Un autre avantage de cette disposition est qu'elle permet en outre d'améliorer fortement l'homogénéité en éclairement de l'écran modulateur spatial, du fait que pour chaque faisceau polarisé, d'une part les deux sous-faisceaux correspondent à des parties différentes de la section de ce faisceau polarisé, et que d'autre part ces deux sous-faisceaux éclairent chacun l'ensemble de l'écran modulateur spatial.

L'invention sera mieux comprise à la lecture de la description qui suit de certains de ces modes de réalisation, description faite en référence aux figures annexées parmi lesquelles :
- la figure 1 montre schématiquement une première version simplifiée d'un projecteur d'images conforme à l'invention ;
- la figure 2 illustre l'action de lentilles convergentes montrées à la figure 1 ;
- la figure 3 montre schématiquement une seconde version préférée de l'invention ;
- la figure 4 montre en perspective certains des éléments de la seconde version de l'invention ;
- la figure 5 montre le schéma d'un projecteur d'images couleurs ;
- la figure 6 représente un projecteur d'images couleurs dans lequel plusieurs écrans de modulation spatiale de lumière coopèrent avec un unique ensemble séparateur-orienteur montré aux figures 3 et 4.

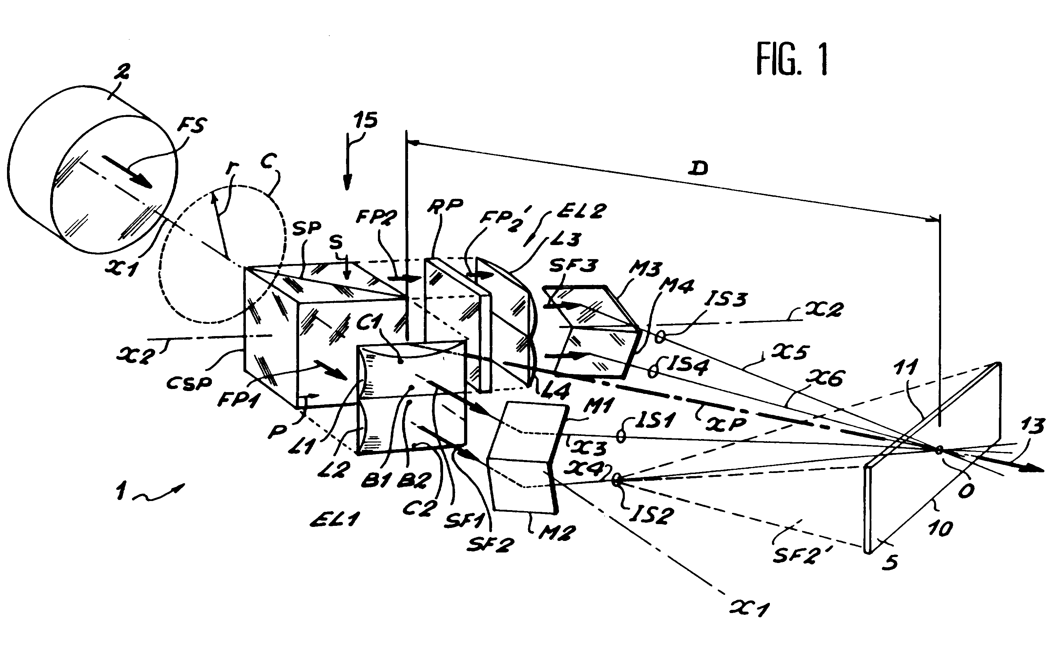

La figure 1 montre partiellement, de façon schématique, une première version simplifiée d'un projecteur d'images 1 conforme à l'invention.

Le projecteur 1 comporte une source de lumière 2 produisant un faisceau FS de lumière ne comportant pas de direction particulière de polarisation. De façon classique les rayons du faisceau FS sont pratiquement parallèles entre eux. A cet effet par exemple, la source de lumière peut être constituée par une lampe d'éclairage (non représentée) placée au foyer d'un réflecteur parabolique (non représenté), ou bien encore au foyer d'une lentille convergente. Dans l'exemple, le faisceau de lumière FS a une section circulaire représentée par un cercle C de rayon r.

Le faisceau source FS se propage suivant un premier axe de propagation x1, en direction d'un séparateur de polarisations SP. Le séparateur de polarisations SP peut être d'un type classique ; il peut être constitué par exemple par une surface séparatrice de polarisations SP formée par un empilement de films en couches minces de matériaux diélectriques, de manière à faire alterner différents indices de réfraction suivant une technique conventionnelle. Dans l'exemple représenté à la figure 1 la surface séparatrice SP de polarisations est réalisée dans un cube séparateur de polarisation CSP, couramment disponible dans le commerce.

La surface séparatrice SP est située sur l'axe de propagation x1 et la normale à cette surface SP forme de façon classique avec cet axe x1 un angle (non représenté) de 45°. La surface séparatrice SP décompose le faisceau FS en deux faisceaux polarisés FP1, FP2 d'intensités pratiquement égales, mais dont les directions de polarisation sont perpendiculaires.

Le premier faisceau polarisé FP1 est un faisceau transmis qui, ayant traversé la surface séparatrice SP, se propage suivant le premier axe de propagation x1. La lumière qui constitue le premier faisceau polarisé FP1 a une direction de polarisation P parallèle au plan d'incidence sur SP (le plan d'incidence étant le plan qui contient le rayon incident moyen de FS, c'est-à-dire l'axe x1, et la normale à la surface séparatrice SP).

Le second faisceau polarisé FP2 est un faisceau réfléchi par la surface séparatrice SP, suivant un second axe x2 de propagation formant un angle sensiblement égal à 90° avec le premier axe de propagation x1. Le second faisceau polarisé FP2 a une direction de polarisation S perpendiculaire au plan d'incidence, c'est-à-dire qu'elle est orthogonale à celle du premier faisceau polarisé FP1.

Les deux faisceaux polarisés FP1, FP2, sont destinés à éclairer un écran modulateur spatial formé dans l'exemple par un écran matriciel 5 type LCD, comportant de façon classique une pluralité de cellules à cristaux liquides (non représentés) du type "nématique en hélice à 90°", disposées en lignes et en colonnes.

Les deux faisceaux polarisés FP1, FP2 doivent être modulés par le même écran matriciel 5. A cette fin, un élément rotateur de polarisation RP est interposé sur le trajet de l'un ou l'autre de ces deux faisceaux polarisés, afin de faire tourner de 90° la polarisation de la lumière formant le faisceau choisi. Dans l'exemple non limitatif décrit, l'élément rotateur RP est disposé sur le trajet du second faisceau polarisé FP2, sur le second axe de propagation x2 et après la surface séparatrice SP, afin de faire tourner de 90° la direction de polarisation de ce faisceau, et l'amener du type S au type P. Par suite, le second faisceau polarisé émerge de l'élément rotateur RP suivant un faisceau repéré FP2′ dont la direction de polarisation est du type P, c'est-à-dire identique à celle du premier faisceau polarisé FP1.

On obtient ainsi deux faisceaux polarisés FP1, FP2′, ayant des directions de polarisation P de même type par rapport au plan sur la surface séparatrice SP, et se propageant suivant deux axes x1, x2 perpendiculaires entre eux ; la lumière de ces deux faisceaux polarisés FP1, FP2′ est donc modulable par le même écran matriciel à cristaux liquides.

Suivant une caractéristique de l'invention, avant de parvenir à l'écran matriciel 5 LCD, au moins un des deux faisceaux polarisés FP1, FP2 est soumis à l'action de moyens qui le séparent en au moins deux sous-faisceaux polarisés, ayant chacun une section dont la forme est homothétique de la forme de l'écran matriciel LCD 5.

A cet effet, dans l'exemple non limitatif décrit, en émergeant respectivement du cube séparateur CSP et du rotateur de polarisation RP, le premier et le second faisceaux polarisés FP1, FP2′ se propagent chacun en direction d'un ensemble EL1, EL2 de lentilles appelées dans la suite de la description lentilles séparatrices, faites de lentilles convergentes qui de préférence sont identiques et juxtaposées ; chaque ensemble EL1, EL2 comprend au moins deux telles lentilles L1, L2 ou L3, L4 ayant chacune une forme homothétique de celle de l'écran matriciel 5 LCD.

Dans l'exemple illustré à la figure 1, où le faisceau de lumière FS non polarisée a une section C circulaire, en supposant qu'un rayon r de cette section ait une longueur égale sensiblement à la moitié d'une diagonale d'une face du cube séparateur de polarisation CSP, les faisceaux polarisés FP1 et FP2 émergent du cube séparateur chacun avec une section carrée qui correspond à la surface maximum d'un carré inscrit dans la section circulaire du faisceau FS.

En supposant d'une part que l'écran modulateur spatial 5 ou écran matriciel LCD 5 soit rectangulaire au format 16/9, conformément à l'invention la forme de chaque lentille L1, L2, L3, L4 est également rectangulaire au format 16/9.

Dans l'exemple non limitatif décrit, chaque ensemble de lentilles EL1, EL2 comporte seulement deux lentilles séparatrices L1, L2 ou L3, L4 de telle manière que chaque faisceau polarisé FP1, FP2 est ainsi transformé (pratiquement sans perte d'énergie) en deux sous-faisceaux SF1,SF2 et SF3, SF4 chacun du type convergent, mais dont les rayons moyens sont parallèles deux à deux : ces rayons moyens sont parallèles au premier axe x1 pour les sous-faisceaux SF1, SF2 issus du premier faisceau polarisé FP1, et parallèles au second axe x2 pour les sous-faisceaux SF3, SF4 issus du second faisceau polarisé FP2′.

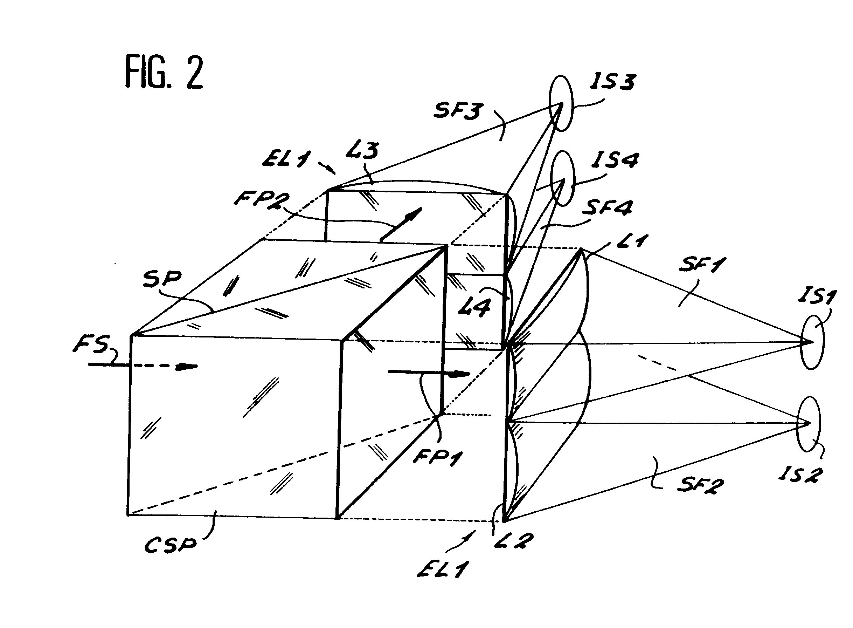

La figure 2 illustre le principe de l'action des lentilles séparatrices L1, L2 et L3, L4 sur les faisceaux polarisés FP1, FP2 ; pour plus de clarté de la figure l'élément rotateur de polarisation RP n'est pas représenté.

A partir du faisceau de lumière non polarisée FS (ayant comme décrit précédemment une section circulaire), le cube séparateur de polarisation CSP produit deux faisceaux polarisés FP1, FP2 chacun de section carrée, se propageant dans des directions perpendiculaires entre elles, et ayant des directions de polarisations perpendiculaires et complémentaires.

Chacun des faisceaux polarisés FP1, FP2 passe par deux lentilles juxtaposées L1, L2 (pour FP1) et L3, L4 (pour FP2 ), convergentes et identiques.

De chaque lentille séparatrice L1, L2 et L3, L4 émerge un sous-faisceau à lumière polarisée SF1, SF2 et SF3, SF4 convergent et qui forme, au foyer de la lentille séparatrice qui l'a produit, une image IS1, IS2 et IS3, IS4 de la source (non représentée) ayant engendré la lumière du faisceau FS non polarisé.

Dans l'exemple, pour chaque faisceau polarisé FP1, FP2, les deux lentilles séparatrices L1, L2 et L3, L4 interposées étant identiques, les deux images de sources LS1, IS2 ou IS3, IS4 sont dans un même plan focal, et ces deux images totalisent l'énergie lumineuse que contiendrait une unique image de source qui serait formée de façon classique par une unique lentille convergente (non représentée) qui intercepterait la totalité d'un faisceau polarisé FP1 ou FP2.

Bien entendu, après la formation d'une image de source IS1 à IS4, chaque sous-faisceau SF1 à SF4 diverge et tend conserver une section homothétique de la forme de la lentille séparatrice L1 à L4 qui l'a engendré.

En référence à nouveau à la figure 1, l'action des lentilles séparatrices L1 à L4 est semblable à celle ci-dessus expliquée en référence à la figure 2.

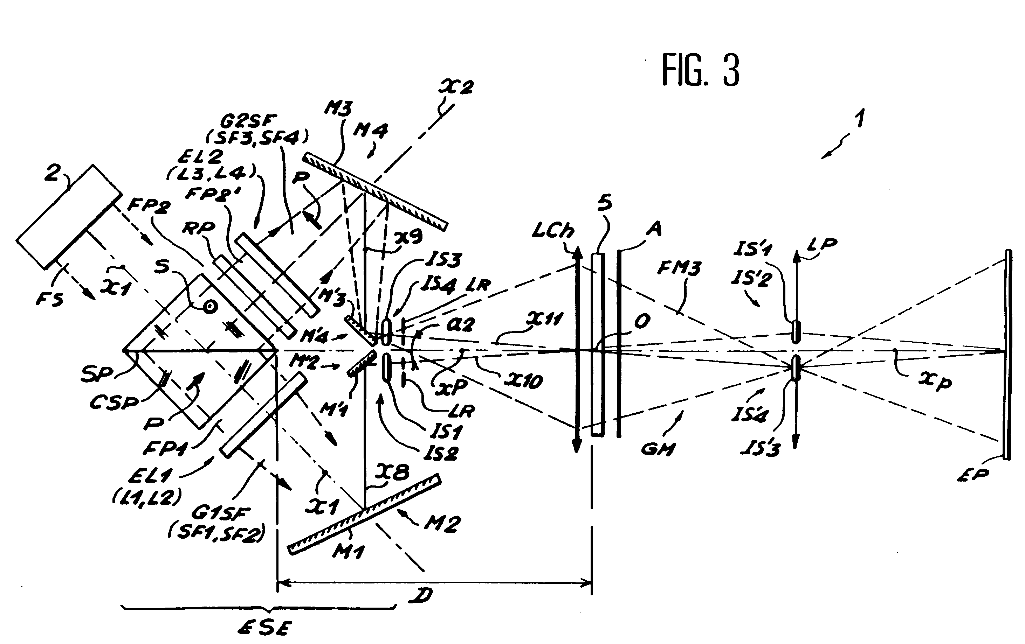

Par rapport à l'exemple de la figure 2, on observe que sur la figure 3 un miroir M1, M2, M3, M4 est disposé sur le trajet de chacun des sous-faisceaux SF1, SF2 et SF3, SF4, en vue de les orienter vers l'écran matriciel 5 LCD.

La face de l'écran matriciel 5 est centrée sur un axe principal xP qui, dans l'exemple non limitatif décrit, est situé dans un même plan que celui qui contient la surface séparatrice SP ; l'axe principal xP est normal au plan contenant l'écran matriciel 5 LCD. Les miroirs M1 et M2 d'une part et les miroirs M3 et M4 d'autre part sont disposés symétriquement par rapport à l'axe principal xP, et ils sont orientés de façon à réfléchir les sous-faisceaux SF1 à SF4 vers l'écran matriciel LCD 5 suivant de nouveaux axes de propagations x3, x4, x5, x6 qui se croisent au centre O de l'écran matriciel 5.

A cette fin, ces miroirs M1 à M4 sont orientés d'une part pour réfléchir chaque sous-faisceau incident SF1 à SF4 vers l'écran matriciel 5 ; et d'autre part pour faire converger l'un vers l'autre les deux sous-faisceaux issus du même faisceau polarisé FP1, FP2, ces deux sous-faisceaux étant parallèles quand ils émergent des lentilles séparatrices.

Ainsi par exemple, le premier et second miroirs M1, M2 sont disposés l'un près de l'autre sur un côté de l'axe principal xP, et sont chargés de dévier et faire converger l'un vers l'autre les premier et second sous-faisceau SF1, SF2 ; alors que les troisième et quatrième miroirs M3, M4 sont l'un près de l'autre, de l'autre côté de l'axe principal xP, et sont chargés de dévier et faire converger les troisième et quatrième sous-faisceaux SF3, SF4.

Comme il a été expliqué en référence à la figure 2, d'une part les sous-faisceaux SF1 à SF4 forment chacun une image IS1 à IS4 de la source, ce qui dans l'exemple de la figure 1 est réalisé après réflexion par les miroirs M1 à M4. D'autre part, après formation de l'image de la source, chaque sous-faisceau SF1 à SF4 devient divergent et tend à conserver une forme homothétique de celle de la lentille séparatrice L1 à L4 dont il provient. Ceci est matérialisé sur la figure 1 avec le sous-faisceau SF2 qui après réflexion par M2 et après avoir formé la seconde image de source IS2, diverge en conservant une forme rectangulaire homothétique de celle de la seconde lentille séparatrice et donc de l'écran matriciel LCD 5, et qui sous la forme du sous-faisceau SF2′, forme une tache d'éclairement sur cet écran matriciel 5.

Il en est de même pour les autres sous-faisceaux, de telle manière que les taches d'éclairement des quatre sous-faisceaux SF1 à SF4 se superposent sur la surface de l'écran matriciel 5 LCD en coïncidant avec les dimensions de ce dernier.

Il est ainsi possible de découper dans la section circulaire du faisceau FS de lumière non polarisée, un premier faisceau polarisé FP1 de section carrée, et d'obtenir le second faisceau polarisé FP2 ayant une section carrée également, de manière que pour l'obtention de chacun de ces faisceaux polarisés FP1, FP2, la perte en énergie lumineuse ne dépasse pas 36 %.

Ensuite, cette efficacité lumineuse peut être conservée par le fait que, d'une part pour chaque faisceau polarisé EP1, FP2 ou plutôt FP2′, la section carrée de ce dernier est découpée par des lentilles convergentes produisant chacune un sous-faisceau dont la section est homothétique de celle de l'écran modulateur spatial 5 ou écran matriciel LCD ; et par le fait d'autre part que les taches d'éclairement des différents sous-faisceaux sont superposées en coïncidence avec la surface de cet écran matriciel 5. Compte tenu du fait que le format 16/9 est un rectangle dont la longueur est égale à presque deux fois la largeur, la solution de l'invention trouve une application particulièrement intéressante dans le cas de ce format 16/9, pour lequel il suffit alors de découper chaque faisceau polarisé par seulement deux lentilles séparatrices rectangulaires.

Cependant le nombre des lentilles séparatrices rectangulaires qui découpent la section carrée d'un faisceau polarisé FP1, FP2 n'est pas limitatif. On peut imaginer une matrice de lentilles rectangulaires au nombre de NxN. Ceci aurait l'avantage de rendre l'éclairage de l'écran matriciel LCD 5 encore plus homogène.

En effet, même avec seulement deux lentiiles séparatrices par faisceau polarisé, on améliore fortement l'homogénéité d'éclairage de l'écran matriciel. En général, les points qui sont vers le centre de la section du faisceau FS sont plus lumineux que ceux situés vers la périphérie, et cette répartition inhomogène se retrouve dans la section carrée d'un faisceau polarisé, le premier faisceau FP1 par exemple quand il émerge du cube séparateur de polarisation CSP.

Avec la présence des deux lentilles séparatrices L1, L2, deux points B1, B2 proches du centre, mais correspondant à des lentilles L1, L2 différentes, sont projetés sur l'écran matriciel LCD 5 vers les bords 10, 11 opposés de ce dernier, où ils s'ajoutent à des rayons provenant de la périphérie du faisceau polarisé tels que des points repérés C1 et C2 respectivement sur la première et la seconde lentille séparatrice L1, L2. Il y a donc addition d'un éclairement provenant du centre (généralement plus fort) avec un éclairement provenant du bord (généralement plus faible), d'où résulte une meilleure homogénéité d'éclairage.

Après avoir traversé l'écran matriciel LCD 5, les quatre sous-faisceaux SF1 à SF4 se propagent suivant une direction moyenne 13 vers un écran de projection (non représenté sur la figure 1), sur lequel ils projettent chacun l'image résultant de leur modulation par l'écran matriciel LCD 5 ; ceci est accompli à l'aide de moyens en eux -mêmes classiques (non représentés à la figure 1) tels que par exemple : lentille de champ, analyseur, objectif de projection.

Il est à noter que la structure montrée à la figure 1 peut présenter un inconvénient qui est couramment rencontré dans les projecteurs classiques, et qui réside dans le fait que cette structure peut conduire, à un encombrement relativement important du projecteur dû à une distance D grande entre le séparateur de polarisation SP et l'écran matriciel LCD 5 ; cette distance D doit être grande afin d'éviter que les sous-faisceaux SF1 à SF4 ne se propagent vers l'écran matriciel 5 en formant un angle important entre les deux sous-faisceaux SF1, SF2 issus du premier faisceau polarisé FP1, ou les deux sous-faisceaux SF3, SF4 issus du second faisceau polarisé FP2', sous peine de devoir employer un objectif de projection ayant une très grande ouverture.

Compte tenu de l'action de convergence des lentilles séparatrices L1 à L4, l'invention se prête particulièrement bien à réaliser un montage illustré à la figure 3, montage qui permet de réduire la distance D tout en conservant un objectif de projection de faible ouverture.

Par rapport à la figure 1, la figure 3 est une vue de dessus comme symbolisé sur la figure 1 par une flèche 15.

La figure 3 montre le projecteur 1 schématiquement, par une vue de dessus, ce qui a pour conséquence de masquer l'un des deux sous-faisceaux SF1, SF2 et SF3, SF4 issus de chaque faisceau polarisé FP1, FP2. La version de l'invention montrée à la figure 3 est semblable à celle montrée à la figure 1 jusqu'à l'instant où les sous-faisceaux atteignent les miroirs M1 à M4.

Le faisceau de lumière non polarisé FS se propage sur le premier axe x1 en direction du cube séparateur de polarisation CSP. Une partie de cette lumière est transmise par la surface séparatrice SP. Elle constitue le premier faisceau polarisé FP1 ayant la direction de polarisation P et se propageant en direction du premier ensemble de lentille EL1 dont seule la première lentille séparatrice L1 est visible ; la seconde lentille séparatrice L2 étant sous la première lentille, elle est masquée par cette dernière.

Une autre fraction de la lumière issue du faisceau FS est réfléchie par la surface séparatrice et constitue le second faisceau polarisé FP2, ayant la direction de polarisation S orthogonale et complémentaire à la direction de polarisaion P. Le second faisceau FP2 se propage suivant le second axe x2, en direction du rotateur de polarisation RP qu'il traverse pour devenir le second faisceau polarisé FP2′ ayant la direction de polarisation de type P comme le premier faisceau FP1. Le second faisceau polarisé FP2 se propage ensuite en direction du second ensemble de lentilles EL2 dont seule la première lentille séparatrice L1 est visible, la seconde lentille L2 étant masquée par cette dernière.

Comme dans l'exemple précédent chaque faisceau polarisé FP1, FP2′ traverse un ensemble de lentilles EL1, EL2, ce qui donne naissance à au moins deux sous-faisceaux SF1, SF2 de type convergent pour le premier faisceau polarisé FP1, et à au moins deux sous-faisceaux SF3, SF4 de type convergent également pour le second faisceau polarisé FP2′.

Pour plus de clarté de la figure 3, les deux sous-faisceaux issus d'un même faisceau polarisé FP1, FP2 étant l'un au dessus de l'autre, ils forment un même groupe de sous-faisceaux G1SF pour les deux sous-faisceaux SF1, SF2, issus du premier faisceau polarisé FP1 et G2SF pour les deux sous-faisceaux SF3, SF4 issus du second faisceau polarisé FP2′. En conséquence les deux sous-faisceaux d'un même groupe sont confondus dans de mêmes limites (les limites du premier groupe G1SF de sous-faisceaux n'étant que partiellement représentées).

Le premier et le second groupe de sous-faisceaux G1SF, G2SF, se propagent respectivement vers les miroirs M1, M2 et M3, M4 (les second et quatrième miroirs M2, M4 étant masqués sur la figure), le long respectivement du premier et du second axe x1, x2 qui sont perpendiculaires entre eux.

Comme dans l'exemple précédent, l'écran matriciel LCD 5 est centré sur l'axe principal xP qui passe par le plan contenant la surface séparatrice SP.

Une différence avec la structure montrée à la figure 1 est que dans cette version, les sous-faisceaux SF1 à SF4 ne sont pas réfléchis directement en direction de l'écran matriciel LCD 5, mais qu'ils sont réfléchis en direction de l'axe principal xP, le long d'un huitième et d'un neuvième axe x8, x9 qui croisent cet axe principal entre l'écran matriciel 5 et le cube séparateur CSP, aussi près que possible de ce dernier.

Avant d'atteindre l'axe principal xP, chaque groupe G1SF, G2SF de sous-faisceaux est réfléchi une seconde fois par des miroirs M′1, M′2 pour le premier groupe de sous-faisceaux et M′3, M′4 pour le second groupe, disposés à proximité de l'axe principal xP. Ces secondes réflexions ont pour effet d'orienter les groupes G1SF, G2SF de sous-faisceaux vers l'écran matriciel LCD 5, afin que les axes moyens des différents sous-faisceaux SF1, SF2 et SF3, SF4 se croisent par l'axe principal xP et sensiblement sur le centre O de l'écran matriciel LCD 5.

Pour les sous-faisceaux SF1, SF2 du premier groupe G1SF, le premier sous-faisceau SF1 est réfléchi vers l'écran 5 par un cinquième miroir M′1 suivant un dixième axe x10 par lequel ce premier sous-faisceau est représenté sur la figure 3. Suivant les mêmes effets que dans l'exemple précédent, le premier sous-faisceau SF1 produit la première image de source IS1, mais dans le cas présent cette image de source est formée très près de l'axe principal xP après la seconde réflexion. Pour ce qui est du second sous-faisceau SF2, qui sur la figure 3 se propage dans un plan plus profond que le premier sous-faisceau, après réflexion par le second miroir M2 il se propage suivant un axe qui apparaît confondu avec le huitième axe x8, en direction de l'axe principal xP, et rencontre un sixième miroir M′2 (qui sur la figure 3 est non visible parce que situé sous le 5ème miroir M′1 et masqué par ce dernier) par lequel il est dévié une seconde fois, en direction de l'écran 5 suivant un axe qui apparaît confondu avec le 10ème axe x10. Ce second sous-faisceau SF2 forme, après cette seconde réflexion, la seconde image de source IS2 qui, étant formée dans un plan plus profond que la première image de source IS1, est masquée par cette dernière.

Pour le second groupe G2SF formé par les troisième et quatrième sous-faisceaux, le troisième sous-faisceau SF3 (qui est le seul dont les limites sont représentées en traits discontinus) est réfléchi une second fois, par un septième miroir M′3 en direction de l'écran matriciel 5 suivant un onzième axe x11. Il forme après sa seconde réflexion la troisième image de source IS3 à proximité de l'axe principal xP et des images IS1, IS2. Le quatrième sous-faisceau SF4 se propage dans un plan plus profond que celui de la figure 3, et après une seconde réflexion sur un huitième miroir M′4 (masqué par le septième miroir M′3) il est orienté en direction de l'écran matriciel 5 suivant un axe qui apparaît confondu avec le onzième axe x11. Ce quatrième sous-faisceau SF4 forme la quatrième image de source IS4 qui sur la figure 3 est masquée par la troisième image IS3.

Dans ces conditions les quatre images de sources IS1 à IS4 sont formées autour de l'axe principal xP à proximité de ce dernier, de telle sorte que, même pour une faible longueur de la distance D entre le cube séparateur CSP et l'écran matriciel 5, on obtient un angle a2 faible formé entre les deux axes x10 et x11 suivant lesquels les sous-faisceaux SF1 et SF3 se propagent en direction de l'écran matriciel 5.

Les taches d'éclairement des quatre sous-faisceaux sont superposées sur l'écran matriciel 5, d'une même manière que dans l'exemple précédent. A cette fin, il peut être avantageux de placer sur le trajet de chaque sous-faisceau SF1 à SF4, et dans le plan contenant chaque image de source IS1 à IS4 ou dans un plan très voisin, une lentille dite "lentille relais" LR ; chaque lentille relais ayant la fonction de faire une conjugaison optique entre une lentille séparatrice L1 à L4 et l'écran matriciel LCD 5. Les quatre taches d'éclairement (chacune produite par un sous-faisceau SF1 à SF4) sont alors sensiblement en coïncidence avec les dimensions de l'écran matriciel 5. Il est à noter que des lentilles relais LR peuvent être utilisées avec cette même fonction dans le cas de l'exemple représenté figure 1.

Dans l'exemple non limitatif décrit, une lentille de champ LCh est disposée sur l'axe optique principal xP à proximité de l'écran matriciel 5, aussi près que possible du point de croisement des axes de propagation x10, x11 des sous-faisceaux SF1 à SF4. La lentille de champ LCh a pour fonction de former des images IS′1, IS′2, IS′3, IS′4 de la source, dans le plan de la pupille d'entrée d'un objectif ou système de projection LP, (représenté schématiquement sur la figure par une lentille) situé sur l'axe optique principal xP, à l'opposé de la lentille de champ LCh par rapport à l'écran matriciel 5.

Le grandissement de cette conjugaison optique est tel que IS′1 à IS′4 s'inscrivent entièrement dans l'ouverture de l'objectif de projection LP.

Les cellules à cristaux liquides (non représentées) de l'écran matriciel 5 sont commandées de façon en elle-même classique (non représentée), par exemple par un signal vidéo. Cette commande des cellules résulte en une modulation angulaire de la direction de polarisation des rayons lumineux qui traversent ces cellules, c'est-à-dire sur les rayons qui constituent des sous-faisceaux SF1 à SF4 formés à partir des deux faisceaux polarisés FP1, FP2′. Cette modulation angulaire est transformée en modulation d'intensité d'une façon en elle-même classique, à l'aide d'un analyseur de polarisation A, lequel analyseur a pour fonction de sélectionner une direction particulière de polarisation (l'analyseur fonctionne dans ce cas comme un polariseur).

Ainsi, si on observe l'écran matriciel 5 à travers l'analyseur A, on voit l'image vidéo, image qui peut être projetée sur un écran de projection EP, à l'aide de l'objectif de projection LP.

Dans les exemples représentés, l'élément rotateur de polarisation RP est placé, sur le trajet de second faisceau polarisé FP2, afin de conférer une même direction de polarisation aux deux faisceaux polarisés. Bien entendu, ceci peut être obtenu également en faisant tourner la direction de polarisation du premier faisceau polarisé FP1. Dans ce cas : il n'y a pas d'élément rotateur de polarisation sur le trajet du second faisceau FP2 qui conserve la direction de polarisation de type S (représentée perpendiculaire au plan de la figure) ; par contre un élément rotateur doit alors être interposé sur le trajet du premier faisceau polarisé FP1, pour faire tourner de 90° sa direction de polarisation, et l'amener du type P au type S.

Il est à noter que la rotation de direction de polarisation de 90° peut être accomplie, de façon classique, à l'aide d'un rotateur du type formé par une lame cristalline, dite "lame demi-onde". Cependant une telle lame a le désavantage d'être chromatique, c'est-à-dire qu'elle ne fonctionne correctement que pour une longueur d'onde, et pour une bande passante spectrale relativement étroite autour de cette longueur d'onde. Aussi, particulièrement pour des applications aux images couleurs qui sont mentionnées dans une suite de la description, il est intéressant que l'élément rotateur de polarisation RP soit constitué par une cellule à cristaux liquides, de type "nématique en hélice à 90°" fonctionnant suivant un mode dit guide d'onde ; une telle cellule remplit la fonction recherchée tout en étant moins coûteuse et moins chromatique. Bien entendu, une telle cellule doit être convenablement orientée par rapport aux directions de propagation et de polarisation de l'un ou l'autre des deux faisceaux polarisés FP1, FP2.

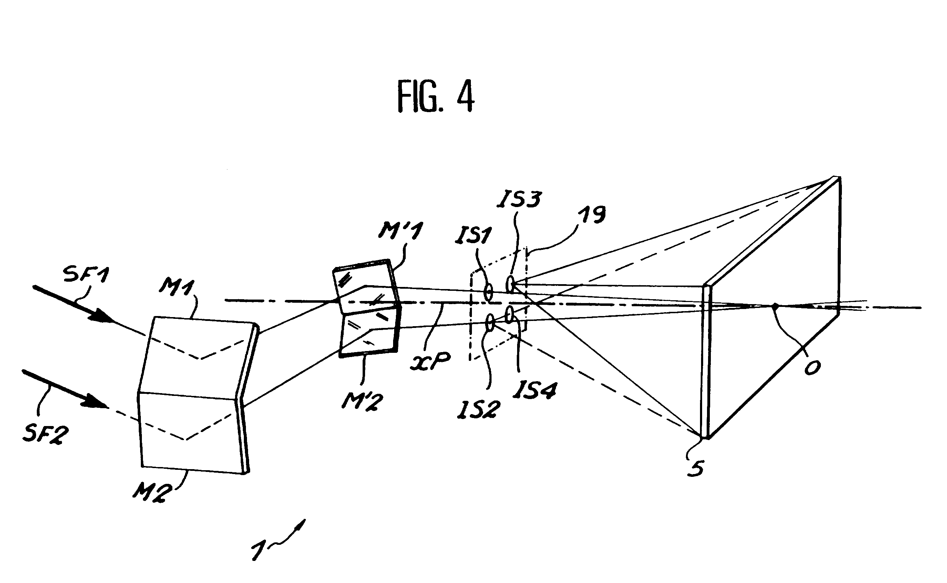

La figure 4 est une vue en perspective qui montre le projecteur 1, dans la version déjà expliquée en référence à la figure 3, en vue d'illustrer la superposition des éclairements sur l'écran matriciel 5. Pour une meilleure compréhension de la figure 4, la représentation du projecteur est limitée à l'écran matriciel LCD 5 et aux miroirs M1, M2 et M′1, M′2 servant à orienter les deux sous-faisceaux SF1, SF2 produits à partir du premier faisceau polarisé FP1.

L'écran matriciel 5 est centré sur l'axe principal xP, et les miroirs M3, M4 et M′3, M′4 (non représentés) servant aux sous-faisceaux issus du second faisceau polarisé FP2 sont disposés à l'opposé et symétriquement.

Le premier sous-faisceau SF1 est réfléchi une première fois par le premier miroir M1, en direction du cinquième miroir M′1 situé à proximité de l'axe principal xP. Il est réfléchi une seconde fois par le cinquième miroir M′1 qui l'oriente vers l'écran matriciel 5. Après cette seconde réflexion, il forme l'image IS1 de la source avant de devenir divergent et former une tache d'éclairage (non représentée) qui est projetée sur la surface de l'écran matriciel.

Le second sous-faisceau SF2 suit une trajectoire semblable. Il est réfléchi une première fois par le second miroir M2 vers le sixième miroir M′2, puis il est réfléchi une seconde fois par ce dernier qui l'oriente vers l'écran matriciel 5. Après cette seconde réflexion, le second sous-faisceau SF2 forme la seconde image de source IS2, puis diverge et tend à conserver une section de forme homothétique de celle de l'écran matriciel 5 ; la section du second sous-faisceau SF2 est matérialisée sur la figure en traits discontinus.

Les troisième et quatrième sous-faisceaux SF3, SF4 forment les troisième et quatrième images de source IS3, IS4, à partir desquelles ces sous-faisceaux divergent et tendent à conserver une section homothétique de la surface de l'écran matriciel 5, de façon à superposer leur éclairement sur ce dernier. Sur la figure 4,la section rectangulaire du troisième sous-faisceau SF3 est représentée en traits continus, à partir de la troisième image de source IS3.

Les quatre images de source sont ainsi réparties de façon symétrique autour de l'axe principal xP, dans un même plan représenté par un carré 19. La disposition idéale est que ces quatre images de source soit formées très près de l'axe principal xP au point par exemple de se toucher.

Les exemples des figures 1 et 3, se rapportent à un projecteur comportant un unique écran modulateur spatial fonctionnant soit avec une lumière polychromatique, soit avec une lumière monochromatique, et produisant soit une image couleur, soit une image noire et blanche. Mais les avantages apportés par l'invention sont aussi valables dans le cas d'un projecteur d'images couleur comportant plusieurs écrans modulateurs.

Plusieurs fonctions principales peuvent être soulignées dans le projecteur 1 montré à la figure 3 par exemple, parmi lesquelles certaines doivent être reproduites plusieurs fois dans un projecteur couleur :
- Parmi ces fonctions principales, il y a la séparation des polarisations P, S orthogonales suivant deux faisceaux polarisés FP1, FP2 ou FP2′ ; puis la séparation des faisceaux FP1, FP2 ou PF2′ de lumière polarisée en sous-faisceaux SF1 à SF4 ; puis l'orientation de ces sous-faisceaux vers l'écran matriciel 5, orientation qui conduit à former les images de source IS1 à IS4 à proximité de l'axe optique principal xP.

Pour faciliter la suite de la description, les éléments qui assurent ces différentes fonctions sont regroupés dans un ensemble appelé "ensemble séparateur-orientateur" ESE (illustré à la figure 3) dans lequel les sous-faisceaux SF1 à SF4 forment respectivement l'image de source IS1 à IS4 à proximité de l'axe principal xP, comme dans l'exemple des figures 3 et 4. Pour simplifier les figures qui suivent, d'une part les quatre images de source IS1 à IS4 sont représentées par un groupe d'image de source GS symbolisé par un rectangle en traits discontinus, et d'autre part les différents sous-faisceaux qui donnent lieu à ces images de source sont représentés par une unique flèche en trait épais appelée groupe principal de sous-faisceau GP.

Une autre fonction importante à distinguer est la fonction de modulation remplie par l'écran matriciel 5 : l'écran matriciel 5 et la lentille de champ LCh sont groupés dans un autre ensemble appelé "ensemble de modulation" EM. En ce qui concerne les sous-faisceaux SF1 à SF4 qui traversent l'écran matriciel 5, ils émergent de ce dernier en constituant des sous-faisceaux modulés FM1, FM2, FM3, FM4, représentés par les axes suivant lesquels ils se propagent (en effet, pour plus de clarté de la figure 3, seules les limites du troisième sous-faisceau modulé FM3 sont représentés). Ces sous-faisceaux modulés sont destinés à former une même image, et dans la suite de la description ils sont appelés "groupe de faisceaux modulés" GM.

Enfin un ensemble séparateur-orientateur ESE suivi d'un ensemble modulateur EM comme montré à la figure 1, est appelé "dispositif monochrome" DM.

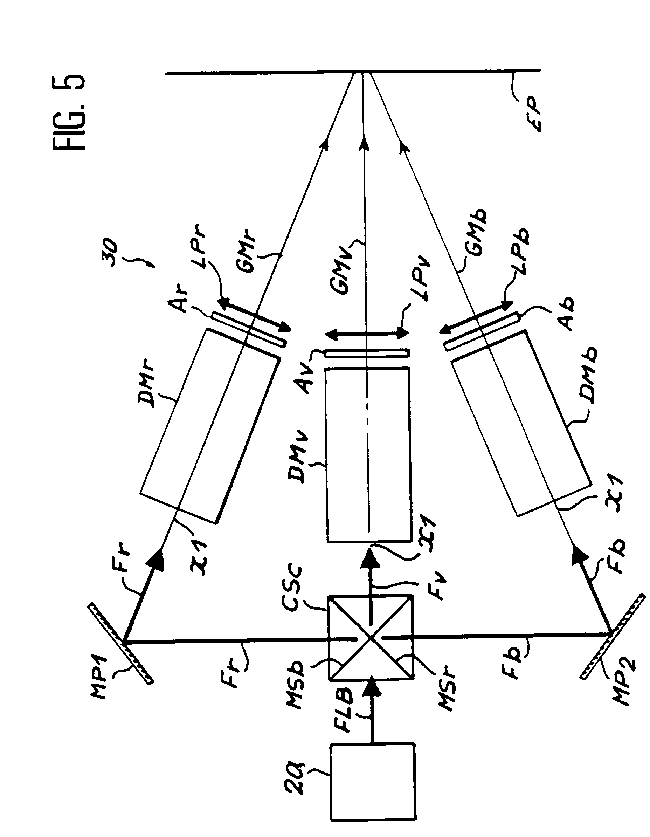

La figure 5 montre de façon schématique une application de l'invention à un projecteur 30 d'images couleur, dans lequel la couleur résulte de la combinaison de plusieurs couleurs primaires, telles que par exemple rouge, vert et bleu.

Le projecteur 30 comporte un premier, un second et un troisième dispositifs monochromes DMᵣ, DMᵥ, DM_{b} affectés respectivement à traiter une lumière de couleur rouge, verte et bleue. Chaque dispositif monochrome est semblable à celui expliqué en référence aux figures 1 à 4 et comprend un axe de propagation x1 sur lequel se propage un faisceau de lumière monochrome non polarisée, Fᵣ, Fᵥ, F_{b}, dont le spectre correspond à la couleur du dispositif monochrome correspondant.

Chacun de ces faisceaux monochromes non polarisés peut être produit à partir d'une source de lumière particulière, ou comme montré sur la figure 5, à partir d'une unique source de lumière blanche 2a. Dans ce dernier cas, le faisceau de lumière blanche FLB est séparé en trois faisceaux monochromes Fᵣ, Fᵥ, F_{b} de couleurs différentes, à l'aide d'éléments sélectifs en longueur d'ondes tels que notamment des filtres dichroïques, par exemple à l'aide d'un cube dichroïque CSC classique : un miroir sélectif en longueur d'onde MSr réfléchit une composante rouge formant le faisceau monochrome Fᵣ qui, après réflexion par un miroir plan MP₁, se propage en direction du dispositif monochromes DMᵣ ; un autre miroir sélectif MS_{b} réfléchit une composante bleue formant le faisceau monochrome F_{b}, lequel se propage en direction du dispositif monochrome DM_{b} après réflexion par un miroir plan MP₂ ; la composante verte formant le faisceau Fᵥ étant transmise, directement en direction du dispositif monochrome DMᵥ.

Chaque dispositif monochrome est suivi d'un analyseur Aᵣ, Aᵥ, A_{b} et d'un objectif de projection LPᵣ, LPᵥ, LP_{b}, de manière que les trois images de couleurs différentes, contenues dans les groupes GMᵣ, GM_{b} et GMᵥ de faisceaux modulés soient superposées sur l'écran de projection EP.

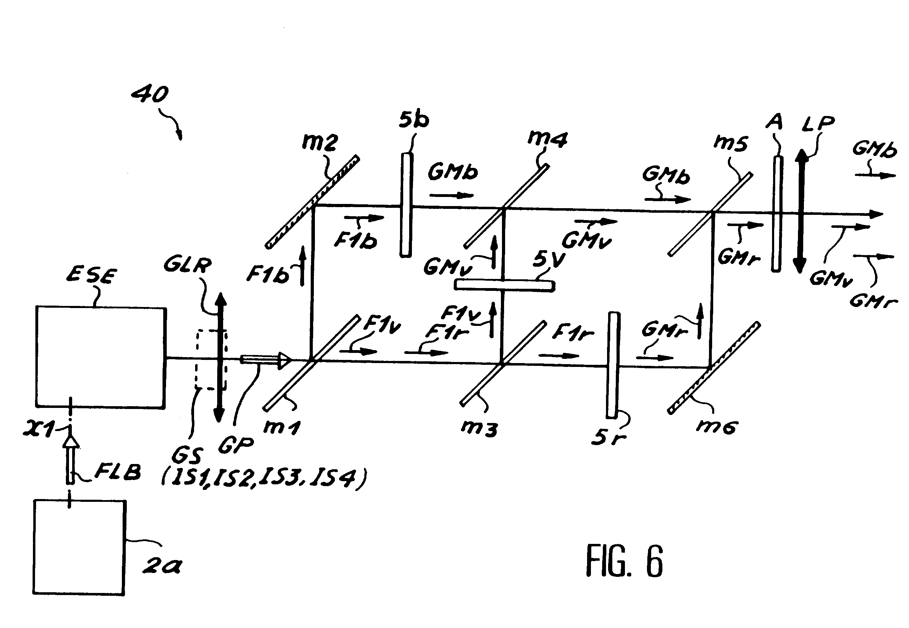

La figure 6 montre schématiquement un projecteur couleur 40 qui permet d'utiliser un unique ensemble séparateur-orientateur ESE, pour plusieurs ensembles de modulations affectés à traiter des couleurs différentes.

La source de lumière 2a produit un faisceau de lumière blanche FLB, non polarisée se propageant le long d'un axe x1. Le faisceau de lumière blanche FLB est appliqué à un ensemble séparateur-orientateur ESE semblable à celui de la figure 3 par exemple, d'une même manière qu'est appliqué le faisceau source FS (sur la figure 3).

L'ensemble séparateur-orientateur ESE délivre un groupe principal GP de sous-faisceaux (en lumière polarisée) ayant des directions de polarisation P de même type, comme dans le cas des deux faisceaux polarisés FP1, FP2′ ; les sous-faisceaux contenus dans le groupe GP forment le groupe d'images de source GS (comprenant les quatre mages IS1 à IS4, non représentées) de part et d'autre d'un axe optique AO, lequel axe optique AO correspond à l'axe optique principal xP montré sur la figure 3. D'une même manière que dans l'exemple montré à la figure 3, une lentille relais peut être affecté à chaque image de source IS1 à IS4 ce qui conduit à disposer, sensiblement dans le plan de ces images de source, une matrice ou groupe de lentilles relais dont la présence est matérialisée sur la figure 6 par une unique lentille repérée GLR.

Les images de source IS1, IS2, IS3 , IS4 contenues dans le groupe d'images source GS sont formées en lumière blanche. Le groupe principal GP de sous-faisceaux (en lumière blanche) se progage en direction d'un premier miroir sélectif en longueur d'onde m1, sensible uniquement à la lumière bleue. Ce miroir réfléchit la composante bleue F1_{b} du groupe principal GP de sous-faisceau, c'est-à-dire la composante bleue de chacun des sous-faisceaux (non représentés) SF1 à SF4, et transmet les composantes vertes et rouges F1ᵥ, F1ᵣ de ces sous-faisceaux ; ainsi la composante bleue se propage seule en direction d'un second miroir m2, et les composantes rouges et vertes se propagent en direction d'un troisième miroir sélectif m3. La composante bleue F1_{b} est réfléchie par le second miroir m2 en direction d'un écran matriciel 5b affecté à la modulation du bleu ; le second miroir m2 n'est éclairé que par de la lumière monochromatique, bleue dans l'exemple, il peut donc ne pas être sélectif. Sous l'action du troisième miroir m3 sensible uniquement au vert, la composante verte F1ᵥ, est réfléchie vers un écran matriciel 5v affecté au vert ; alors que la composante rouge F1ᵣ est transmise, par le troisième miroir m3, en direction d'un écran matriciel 5r affecté au rouge. Ainsi les trois composantes sont amenées chacune à traverser l'écran matriciel 5r, 5b, 5v qui leur est affecté, et constituent chacune ensuite un groupe de faisceaux modulés, GMᵣ, GM_{b} et GMᵥ. Le groupe modulé GM_{b} relatif au bleu traverse successivement, un quatrième miroir sélectif m4 sensible uniquement au vert, et un cinquième miroir sélectif m5 sensible uniquement au rouge, pour arriver ensuite à l'objectif de projection LP.

Le groupe modulé GMᵥ relatif au vert, est réfléchi par le miroir sélectif m4, puis traverse le cinquième miroir sélectif m5 pour arriver à l'objectif de projection LP.

Enfin, le groupe GMᵣ relatif au rouge est réfléchi par un sixième miroir m6 sélectif ou non, puis réfléchi à nouveau par le miroir sélectif m5, en direction de l'objectif de projection LP.

Un analyseur peut être associé à chaque écran matriciel, ou bien comme montré à la figure 6, un unique analyseur A peut être interposé, par exemple entre le cinquième miroir sélectif m5 et l'objectif de projection LP. Les groupes modulés GM_{b}, GMᵣ, GMᵥ se propagent ensuite vers un écran de projection (non représenté) sur lequel sont superposées les trois images de couleur différente contenues chacune dans un groupe modulé.

Les lentilles de champs ne sont pas représentées sur la figure 6, mais la disposition de la figure 6 est compatible avec l'utilisation de telles lentilles.

Un avantage de cette disposition est notamment qu'elle permet d'avoir des distances égales entre les images de source IS1 à IS4 et les écrans matriciels 5ᵥ, 5ᵣ, 5_{b}, ainsi qu'entre ces écrans matriciels et l'objectif de projection LP.

Bien entendu on peut envisager toute permutation des couleurs.

## Revendications

1. Projecteur d'images comportant au moins un écran modulateur spatial (5) de lumière, au moins un séparateur de polarisation (SP, CSP) de la lumière éclairé par un faisceau (FS) de lumière non polarisée délivrée par une source (2), le séparateur de polarisation (SP, CSP) produisant en réponse en sortie un premier et un second faisceaux polarisés (FP1, FP2 et FP2') ayant l'un par rapport à l'autre des directions de polarisation orthogonales de la lumière, la lumière des deux faisceaux polarisés étant destinée à être modulée par l'écran modulateur spatial, caractérisé en ce qu'il comporte en outre des moyens pour, d'une part séparer la lumière d'au moins un de ces deux faisceaux polarisés (FP1, FP2) en au moins deux sous-faisceaux (SF1, SF2 et SF3, SF4) ayant une section dont la forme est homothétique de celle de l'écran modulateur spatial, et d'autre part pour superposer sur l'écran modulateur spatial (5) les taches d'éclairage de tous les sous-faisceaux.

2. Projecteur selon la revendication 1, caractérisé en ce que l'écran modulateur spatial (5) a une forme rectangulaire.

3. Projecteur selon l'une des revendications précédentes, caractérisé en ce que l'écran modulateur spatial (5) est au format 16/9.

4. Projecteur selon l'une des revendications précédentes, caractérisé en ce que l'écran modulateur spatial est du type écran à cristaux liquides.

5. Projecteur selon l'une des revendications précédentes, caractérisé en ce que le faisceau (FS) de lumière non polarisée a une section circulaire.

6. Projecteur selon l'une des revendications précédentes, caractérisé en ce qu'un ensemble de lentilles (EL1, EL2) formé d'au moins deux lentilles convergentes dites lentilles séparatrices (L1, L2) est disposé sur le trajet d'au moins un des deux faisceaux polarisés (FP1, FP2 et FP2′).

7. Projecteur selon la revendication 6, caractérisé en ce que chaque lentille séparatrice (L1, L2) a une surface dont la forme est homothétique de celle de l'écran modulateur spatial (5).

8. Projecteur selon l'une des revendications 6 ou 7, caractérisé en ce que chaque lentille séparatrice (L1, L2) est rectangulaire.

9. Projecteur selon l'une quelconque des revendications 6 ou 7 ou 8, caractérisé en ce que dans chaque ensemble de lentilles (EL1, EL2), les lentilles séparatrices sont juxtaposées de manière que chaque ensemble de lentilles (EL1, EL2) ait une section homothétique de la forme de la section du faisceau polarisé (FP1, FP2) sur le trajet duquel il est disposé.

10. Projecteur selon l'une quelconque des revendications 6 ou 7 ou 8 ou 9, caractérisé en ce que chaque ensemble de lentilles (EL1, EL2) intercepte la totalité du faisceau polarisé (FP1, FP2′) sur le trajet duquel il est disposé.

11. Projecteur suivant l'une des revendications précédentes, caractérisé en ce que le séparateur de polarisation (SP, CSP) confère aux deux faisceaux polarisés (FP1, FP2) une section carrée.

12. Projecteur suivant l'une des revendications précédentes, caractérisé en ce qu'il comporte en outre un élément rotateur de direction de polarisation (RP) interposé sur le trajet de l'un ou l'autre des deux faisceaux polarisés (FP1, FP2).

13. Projecteur suivant la revendication 12, caractérisé en ce que l'élément rotateur de direction de polarisation (RP) est une cellule à cristaux liquides du type "nématique en hélice à 90°".

14. Projecteur suivant l'une des revendications précédentes, caractérisé en, ce que le séparateur de polarisation (CSP) comporte une surface séparatrice de polarisation (SP) perpendiculaire au plan de l'écran modulateur spatial (5).

15. Projecteur suivant la revendication 14, l'écran modulateur spatial (5) étant centré sur un axe principal (xP) normal à cet écran modulateur, caractérisé en ce qu'il comporte des moyens de réflexion (M1 à M4, M′1 à M′4) pour réfléchir les sous-faisceaux (SF1 à SF4) au moins deux fois : une première fois en direction de l'axe optique (xP) et une seconde fois en direction de l'écran modulateur spatial (5) de manière que chaque sous-faisceaux forme l'image de la source (IS1 à IS4) après la seconde réflexion et projette sur l'écran modulateur spatial (5) une tache d'éclairement dont les dimensions coïncident avec celles de l'écran modulateur spatial.

16. Projecteur suivant l'une des revendications précédentes caractérisé en ce que l'ensemble des éléments servant d'une part à séparer le faisceau (FS) de lumière non polarisée en deux faisceaux polarisés (FP1, FP2, FP2′), puis d'autre part à transformer au moins un des deux faisceaux polarisés en au moins deux sous-faisceaux (FS1 à FS4) formant chacun une image de la source (IS1 à IS4), constitue un ensemble dit séparateur-orientateur (ESE) coopérant avec un écran modulateur spatial (5) pour réaliser des images monochromes.

17. Projecteur suivant l'une quelconque des revendications 1 à 15, caractérisé en ce que le séparateur de polarisation (SP), le rotateur de polarisation (RP), le ou les ensembles (EL1, EL2) de lentilles séparatrices servent à constituer un ensemble séparateur-orienteur (ESE) dont le séparateur de polarisation (SP) est éclairé par une lumière non polarisée blanche (FLB), ledit ensemble orienteur-séparateur (ESE) produisant plusieurs images (IS1 à IS4) de la source, et en ce que l'ensemble séparateur-orienteur (ESE) coopère avec au moins deux écrans modulateurs spatiaux (5ᵥ, 5ᵣ, 5_{b}) par l'intermédiaire d'un dispositif de séparation des couleurs de la lumière (m1 à m6) , chaque écran modulateur spatial modulant une lumière de couleur différente.

18. Projecteur d'images suivant la revendication 17, caractérisé en ce qu'il comporte un ensemble séparateur-orienteur (ESE) coopérant avec au moins trois écrans modulateurs spatiaux (5_{b}, 5ᵥ, 5ᵣ) et un unique objectif de projection (LP), à l'aide d'au moins six miroirs (m1 à m6) dont au moins quatre sont des miroirs sélectifs en longueur d'onde, chaque écran modulateur spatial (5_{b}, 5_{V}, 5ᵣ) modulant une lumière de couleur différente.

## Patentansprüche

1. Bildprojektor mit mindestens einem räumlich das Licht modulierenden Schirm (5) und mindestens einem Lichtpolarisationsseparator (SP, CSP), der von einem unpolarisierten Lichtstrahl (FS) aus einer Quelle (2) beleuchtet wird, wobei der Polarisationsseparator (SP, CSP) am Ausgang als Antwort zwei polarisierte Strahlen (FP1, FP2 und FP2') liefert, deren Lichtpolarisationsrichtungen zueinander orthogonal sind, worauf das Licht der beiden polarisierten Strahlen vom räumlichen Modulationsschirm moduliert werden soll, dadurch gekennzeichnet, daß er weiter Mittel aufweist, um einerseits das Licht mindestens eines dieser beiden polarisierten Strahlen (FP1, FP2) in mindestens zwei Teilstrahlen (SF1, SF2 und SF3, SF4) aufzuteilen, deren Querschnitte je zu dem des räumlichen Modulationsschirms homothetisch sind, und um andererseits auf dem räumlichen Modulationsschirm (5) die Leuchtflecken aller Teilstrahlen zu überlagern.

2. Projektor nach Anspruch 1, dadurch gekennzeichnet, daß der räumliche Modulationsschirm (5) rechteckförmig ist.

3. Projektor nach einem der vorhergehenden Ansprüche, dadurch gekennzeichnet, daß der räumliche Modulationsschirm (5) das Format 16:9 besitzt.

4. Projektor nach einem der vorhergehenden Ansprüche, dadurch gekennzeichnet, daß der räumliche Modulationsschirm ein Flüssigkristallschirm ist.

5. Projektor nach einem der vorhergehenden Ansprüche, dadurch gekennzeichnet, daß der unmodulierte Lichtstrahl (FS) kreisförmigen Querschnitt besitzt.

6. Projektor nach einem der vorhergehenden Ansprüche, dadurch gekennzeichnet, daß eine Linseneinheit (EL1, EL2), die aus mindestens zwei Sammellinsen (L1, L2) besteht, welche Separatorlinsen genannt werden, im Verlauf mindestens eines der polarisierten Strahlen (FP1, FP2 und FP2') liegt.

7. Projektor nach Anspruch 6, dadurch gekennzeichnet, daß jede Separatorlinse (L1, L2) eine Oberfläche hat, deren Form mit der des räumlichen Modulationsschirms (5) homothetisch ist.

8. Projektor nach einem der Ansprüche 6 oder 7, dadurch gekennzeichnet, daß jede Separatorlinse (L1, L2) rechteckig ist.

9. Projektor nach einem beliebigen der Ansprüche 6 oder 7 oder 8, dadurch gekennzeichnet, daß in jeder Linseneinheit (REL1, EL2) die Separatorlinsen so nebeneinander liegen, daß jede Linseneinheit (EL1, EL2) eine Form besitzt, die zur Form des Querschnitts des polarisierten Strahls (FP1, FP2) homothetisch ist, in dessen Verlauf sie sich befindet.

10. Projektor nach einem beliebigen der Ansprüche 6 oder 7 oder 8 oder 9, dadurch gekennzeichnet, daß jede Linseneinheit (EL1, EL2) den ganzen polarisierten Strahl (FP1, FP2') auffängt, in dessen Verlauf sie liegt.

11. Projektor nach einem der vorhergehenden Ansprüche, dadurch gekennzeichnet, daß der Polarisationsseparator (SP; CSP) den beiden polarisierten Strahlen (FP1, FP2) eine quadratischen Querschnitt verleiht.

12. Projektor nach einem der vorhergehenden Ansprüche, dadurch gekennzeichnet, daß er weiter ein die Polarisationsrichtung drehendes Element (RP) aufweist, das im Verlauf des einen der beiden polarisierten Strahlen (FP1, FP2) liegt.

13. Projektor nach Anspruch 12, dadurch gekennzeichnet, daß das die Polarisationsrichtung drehende Element (RP) eine Flüssigkristallzelle vom nematischen Typ mit 90°-Spirale ist.

14. Projektor nach einem der vorhergehenden Ansprüche, dadurch gekennzeichnet, daß der Polarisationsseparator eine Polarisations-Trennebene (SP) senkrecht zur Ebene des räumlichen Modulationsschirms (5) aufweist.

15. Projektor nach Anspruch 14, bei dem der räumliche Modulationsschirm (5) auf eine Hauptachse (xP) zentriert ist, die senkrecht zu diesem Schirm verläuft, dadurch gekennzeichnet, daß Reflexionsmittel (M1 bis M4, M'1 bis M'4) vorgesehen sind, um die Teilstrahlen (SF1 bis SF4) mindestens zweimal zu reflektieren, nämlich ein erstes Mal in Richtung zur optischen Achse (xP) und ein zweites Mal in Richtung zum räumlichen Modulationsschirm (5), so daß jeder Teilstrahl das Bild (IS1 bis IS4) der Quelle nach der zweiten Reflexion bildet und auf den räumlichen Modulationsschirm (5) einen Leuchtfleck projiziert, dessen Abmessungen mit denen des räumlichen Modulationsschirms koinzidieren.

16. Projektor nach einem der vorhergehenden Ansprüche, dadurch gekennzeichnet, daß die Gruppe von Elementen, die einerseits zur Trennung des unpolarisierten Lichtstrahls (FS) in zwei polarisierte Strahlen (FP1, FP2, FP2') und dann andererseits zur Umwandlung mindestens eines der beiden polarisierten Strahlen in mindestens zwei Teilstrahlen (FS1 bis FS4) dienen, welche je ein Bild (IS1 bis IS4) der Quelle formen, eine Gruppe darstellt, die Separator-Richteinheit (ESE) genannt wird und mit einem räumlichen Modulationsschirm (5) zusammenwirkt, um einfarbige Bilder zu realisieren.

17. Projektor nach einem beliebigen der Ansprüche 1 bis 15, dadurch gekennzeichnet, daß der Polarisationsseparator (SP), das die Polarisation drehende Element (RP) und die Einheit oder Einheiten (EL1, EL2) von Separatorlinsen eine Separator-Richteinheit (ESE) bilden, in der der Polarisationsseparator (SP) von einem unpolarisierten weißen Licht bestrahlt wird, wobei die Separator-Richteinheit (ESE) mehrere Bilder (IS1 bis IS4) der Quelle erzeugt, und daß die Separator-Richteinheit (ESE) mit mindestens zwei räumlichen Modulationsschirmen (5v, 5r, 5b) über eine Vorrichtung zum Trennen der Farben des Lichts (m1 bis m6) zusammenwirken und jeder räumliche Modulationsschirm Licht einer anderen Farbe moduliert.

18. Bildprojektor nach Anspruch 17, dadurch gekennzeichnet, daß er eine Separator-Richteinheit (ESE) aufweist, die mit mindestens drei räumlichen Modulationsschirmen (5b, 5v, 5r) sowie einem gemeinsamen Projektionsobjektiv (LP) mit Hilfe von mindestens sechs Spiegeln (m1 bis m6) zusammenwirken, von denen mindestens vier wellenlängenselektive Spiegel sind, wobei jeder räumliche Modulationsschirm (5b, 5v, 5r) Licht einer anderen Farbe moduliert.

## Claims

1. Image projector including at least one light spatial modulator screen (5), at least one light-polarization separator (SP,CSP) illuminated by an unpolarized light beam (FS) delivered by a source (2), the polarization separator (SP,CSP) producing in response, at its output, first and second polarized beams (FP1, FP2 and FP2') having mutually orthogonal light-polarization directions, the light in the two polarized beams being intended to be modulated by the spatial modulator screen, characterized in that it furthermore includes means for, on the one hand, separating the light in at least one of these two polarized beams (FP1, FP2) into at least two sub-beams (SF1, SF2 and SF3, SF4) having a cross-section whose shape is homothetic with that of the spatial modulator screen and, on the other hand, for superposing the illumination spots of all the sub-beams on the spatial modulator (5).

2. Projector according to Claim 1, characterized in that the spatial modulator screen (5) has a rectangular shape.

3. Projector according to either one of the preceding claims, characterized in that the spatial modulator screen (5) has the 16/9 format.

4. Projector according to one of the preceding claims, characterized in that the spatial modulator screen is of the liquid-crystal display type.

5. Projector according to one of the preceding claims, characterized in that the unpolarized light beam (FS) has a circular cross-section.

6. Projector according to one of the preceding claims, characterized in that a set of lenses (EL1, EL2) formed by at least two converging lenses termed separating lenses (L1, L2) is arranged on the path of at least one of the two polarized beams (FP1, FP2 and FP2').

7. Projector according to Claim 6, characterized in that each separating lens (L1, L2) has a surface whose shape is homothetic with that of the spatial modulator screen (5).

8. Projector according to one of Claims 6 and 7, characterized in that each separating lens (L1, L2) is rectangular.

9. Projector according to either one of Claims 6 or 7 or 8, characterized in that in each set of lenses (EL1, EL2), the separating lenses are juxtaposed in such a way that each set of lenses (EL1, EL2) has a cross-section homothetic with the shape of the cross-section of the polarized beam (FP1, FP2), on the path of which it is arranged.

10. Projector according to any one of Claims 6 or 7 or 8 or 9, characterized in that each set of lenses (EL1, EL2) intercepts the entirety of the polarized beam (FP1, FP2') on the path of which it is arranged.

11. Projector according to one of the preceding claims, characterized in that the polarization separator (SP,CSP) gives the two polarized beams (FP1, FP2) a square cross-section.

12. Projector according to one of the preceding claims, characterized in that it furthermore includes a polarization-direction rotator element (RP) interposed on the path of one or other of the two polarized beams (FP1, FP2).

13. Projector according to Claim 12, characterized in that the polarization-direction rotator element (RP) is a liquid-crystal cell of the "90° twisted nematic" type.

14. Projector according to one of the preceding claims, characterized in that the polarization separator (CSP) includes a polarization separator surface (SP) perpendicular to the plane of the spatial modulator screen (5).

15. Projector according to Claim 14, the spatial modulator screen (5) being centred on a principal axis (xP) normal to this modulator screen, characterized in that it includes reflection means (M1 to M4, M'1 to M'4) for reflecting the sub-beams (SF1 to SF4) at least twice: a first time in the direction of the optical axis (xP) and a second time in the direction of the spatial modulator screen (5), so that each sub-beam forms the image of the source (IS1 to IS4) after the second reflection and projects onto the spatial modulator screen (5) an illumination spot whose dimensions coincide with those of the spatial modulator screen.

16. Projector according to one of the preceding claims, characterized in that the set of elements used, on the one hand, to separate the unpolarized light beam (FS) into two polarized beams (FP1, FP2, FP2') then, on the other hand, to convert at least one of the two polarized beams into at least two sub-beams (FS1 to FS4), each forming an image of the source (IS1 to IS4), constitutes a so-called separating-orienting assembly (ESE) co-operating with a spatial modulator screen (5) to produce monochrome images.

17. Projector according to any one of Claims 1 to 15, characterized in that the polarization separator (SP), the polarization rotator (RP), the set or sets (EL1, EL2) of separating lenses are used to form a separating-orienting assembly (ESE) whose polarization separator (SP) is illuminated by an unpolarized white light (FLB), the said orienting-separating assembly (ESE) producing a plurality of images (IS1 to IS4) of the source, and in that the separating-orienting assembly (ESE) co-operates with at least two spatial modulator screens (5_{g}, 5ᵣ, 5_{b}) via a device (m1 to m6) for separating the colours of light, each spatial modulating screen modulator a light of a different colour.

18. Image projector according to Claim 17, characterized in that it includes a separating-orienting assembly (ESE) co-operating with at least three spatial modulator screens (5_{b}, 5_{g}, 5ᵣ) and a single projection objective (LP), with the aid of at least six mirrors (m1 to m6), at least four of which are wavelength-selective mirrors, each spatial modulator screen (5_{b}, 5_{g}, 5ᵣ) modulating a light of a different colour.
